# EUROPÄISCHE PATENTSCHRIFT

(11) **EP 4 366 516 B1**
(45) Veröffentlichungstag und Bekanntmachung des Hinweises auf die Patenterteilung: **18.06.2025**
(21) Anmeldenummer: 22800225.9
(22) Anmeldetag: 06.10.2022
(51) Int. Cl.: A01K 5/01

(54) **FUTTERLIFT**
FEEDLIFT
ÉLÉVATEUR DE NOURRITURE

(30) Priorität: 15.10.2021 DE 102021126790
(43) Veröffentlichungstag der Anmeldung: 15.05.2024
(73) Patentinhaber: Vogel und Weber GmbH Produktion und Vertrieb, 52070 Aachen (DE)
(72) Erfinder: VOGEL, Jürgen, 52066 Aachen (DE)
(74) Vertreter: Kohlmann, Kai
(86) Internationale Anmeldenummer: PCT/EP2022/077860
(87) Internationale Veröffentlichungsnummer: WO 2023/061855

(56) Entgegenhaltungen:
- US-B1- 11 013 213
- US-B1- 8 776 725

## Beschreibung

Die Erfindung betrifft einen Futterlift für Haustiere mit einer in vertikaler Richtung geführt verfahrbaren Plattform zur Aufnahme von Futternäpfen und einem Antrieb zum Verfahren der Plattform.

Aus der US 8,776,725 B1 ist ein Futterlift bekannt, der einen Fuß umfasst, auf dem eine vertikal ausgerichtete Zentralsäule angeordnet ist. Entlang dieser Säule ist die Plattform geführt und verfahrbar.

Die US 5,584,263 B1 offenbart einen Futterlift mit zwei vertikalen holen Führungen in denen jeweils synchron laufende Ketten umlaufen, um eine Plattform zur Aufnahme von Futternäpfen in vertikaler Richtung zu bewegen. Der Antrieb befindet sich in einem Gehäuse an der Oberseite der beiden vertikalen Führungen.

Die US 2019/090452 A1 offenbart einen Futterlift mit einer entlang einer zentralen vertikalen Führung verfahrbaren Plattform zur Aufnahme von Futternäpfen umfassend einen am oberen Ende der vertikalen Führung angeordneten Antrieb zum Bewegen der Plattform. Der Antrieb umfasst eine handbetriebene Spule auf die ein mit der Plattform verbundenes Kabel aufgewickelt wird.

Die US 5,054,431 offenbart eine entlang zweier vertikaler Stützen geführte Plattform zur Aufnahme von Futternäpfen. Die Plattform wird einseitig über einen umlaufenden Zahnriemen angetrieben. Der Zahnriemen wird an der Unter- und Oberseite über Zahnräder umgelenkt. Der Antriebsmotor ist an der Oberseite des Futterlifts angeordnet.

Die US 2016/316715 A1 offenbart einen Futterlift mit zwei vertikalen Stützen, die eine Plattform zur Aufnahme der Futternäpfe in vertikaler Richtung führen. An der Oberseite der beiden vertikalen Führungen ist in einer oberen Konsole ein Motor mit einer Spule angeordnet, auf die zwei jeweils seitlich an der Plattform angeschlagene Kabel aufgewickelt werden. Die Kabel werden freilaufend neben den vertikalen Stützen geführt und sind an den beiden Schmalseiten der Plattform angeschlagen. Nachteilig ist die zwingend erforderliche Anordnung des Antriebs an der Oberseite des Futterlifts, was dessen Standsicherheit reduziert und die Gefahr eines ungleichmäßigen Aufwickelns der Kabel auf der Spule, was zu einer Schiefstellung und einem ungleichmäßigen Lauf der Plattform führen kann.

Die US 11 013 213 B1 offenbart einen Futterspender für Haustiere mit zwei Behältern zur Aufnahme und Lagerung von Haustierfutter und/oder Wasser mit einer in vertikaler Richtung geführt verfahrbaren Behälterhalterung zur Aufnahme der beiden Behälter und einem Antrieb zum Verfahren der Behälterhalterung, wobei der Antrieb ein Riemengetriebe mit einem zwischen einer Antriebsriemenscheibe und einer zweiten Scheibe umlaufenden Riemen aufweist, wobei die Antriebsriemenscheibe durch einen Motor angetrieben wird.

Ausgehend von diesem Stand der Technik liegt der Erfindung die Aufgabe zugrunde, einen Futterluft mit verbessertem Antriebskonzept zu schaffen, welches die Standsicherheit des Futterlifts erhöht und zugleich Schiefstellungen, Verkantungen und einen ungleichmäßigen Lauf sowohl bei der Aufwärts- als auch der Abwärtsbewegung der Plattform vermeidet. Insbesondere soll ein Überschwappen des Inhalts in den Futternäpfen aufgrund des verbesserten Antriebskonzepts vermieden werden.

Diese Aufgabe wird beim Futterlift der eingangs erwähnten Art dadurch gelöst, dass
- der Antrieb ein Riemengetriebe mit einem umlaufenden Zahnriemen und ein durch einen Motor angetriebenes Antriebsritzel aufweist,
- der Motor und das Antriebsritzel in einem Fuß (2) des Futterlifts angeordnet sind,
- das Antriebsritzel mit dem umlaufenden Zahnriemen kämmt,
- eine Linearführung zwei sich von dem Fuß vertikal nach oben erstreckende, ortsfeste Führungselemente und jeweils ein sich entlang jedes der beiden ortsfesten Führungselemente bewegliches Führungselement aufweist, wobei die beiden beweglichen Führungselemente seitlich an der Plattform befestigt sind,
- in dem Fuß des Futterlifts und an einer Oberseite der beiden ortsfesten Führungselemente Umlenkungen für den umlaufenden Zahnriemen derart angeordnet sind, dass der Zahnriemen entlang der beiden ortsfesten Führungselemente jeweils in Trumen mit entgegengesetzter Laufrichtung umläuft und
- die Plattform an sich gleichgerichtet entlang der beiden ortsfesten Führungselemente bewegenden Trumen des umlaufenden Zahnriemens befestigt ist.

Wesentliche Vorteile der Erfindung gegenüber den bekannten Antriebskonzepten bestehen in einer verbesserten Standsicherheit aufgrund der Anordnung des Motors in dem Fuß, der verbesserten Linearführung durch die beiden sich von dem Fuß vertikal nach oben erstreckenden ortsfesten Führungselemente sowie der gleichmäßigen Einleitung der Antriebskräfte in die Plattform an deren seitlichen Rändern mit einem einzigen umlaufenden Antriebsmittel in Form eines Zahnriemens, der von einem zentralen Motor angetrieben wird, wodurch Schiefstellungen der Plattform, Verkantungen und ein unruhiger Lauf vermieden werden. Der einzige umlaufende Zahnriemen erlaubt nicht nur die Übertragung der Antriebskräfte, sondern darüber hinaus eine präzise Steuerung der Plattform. Weitere Vorteile des Zahnriemens sind
- die geringe Geräuschentwicklung,
- die hohe Lebensdauer,
- weitgehende Wartungsfreiheit und
- geringe Längung.

In dem vorzugsweise als Gehäuse ausgebildeten Fuß des Futterlifts und an einer Oberseite der beiden ortsfesten Führungselemente sind Umlenkungen, z.B. in Form von Umlenkrollen bzw. Riemenscheiben, für den umlaufenden Zahnriemen derart angeordnet, dass der Zahnriemen entlang der beiden ortsfesten Führungselemente jeweils in Trumen mit entgegengesetzter Laufrichtung umläuft. Als Trum wird ein Teil des umlaufenden, Zugkraft ausübenden Zahnriemens des Riemengetriebes bezeichnet. Entlang jedes der beiden ortsfesten, vertikalen Führungselemente läuft der Zahnriemen in Trumen mit entgegengesetzter Laufrichtung um, d. h. während der Zahnriemen in einem Trum aufwärts läuft, läuft er über die an der Oberseite des ortsfesten Führungselementes angeordnete Umlenkung in dem anderen Trumen abwärts.

Die längliche, vorzugsweise ovale Plattform ist an ihren seitlichen Rändern an sich gleichgerichtet entlang der beiden ortsfesten Führungselemente bewegenden Trumen des umlaufenden Zahnriemens befestigt.

Aufgrund der weitgehenden Spielfreiheit sowie der Dämpfungseigenschaften ist die Linearführung vorzugsweise als Gleitführung ausgeführt, die zwei sich von dem Fuß vertikal nach oben erstreckende ortsfeste Führungsachsen und jeweils ein entlang jeder Führungsachse bewegliches Gleitlager aufweist. Die ortsfesten Führungsachsen sind beispielsweise als zylindrische Führungsstangen an dem Fuß ortsfest befestigt. Die Geleitlager sind als Gleitbuchsen mit kreisrundem Querschnitt ausgeführt.

Die beiden Gleitlager sind vorzugsweise jeweils in einem seitlich an der Plattform angeordneten Durchgang befestigt. Die Befestigung in dem Durchgang erfolgt insbesondere mit einer Übermaßpassung bzw. Presspassung. Alternativ oder zusätzlich kann die Befestigung stoffschlüssig durch Verkleben des Gleitlagers in dem Durchgang erfolgen.

Das als Gleitlager ausgeführte bewegliche Führungselement kann jedoch auch als integraler Bestandteil der Plattform ausgeführt sein, beispielsweise durch eine im Durchmesser an die zylindrischen Führungsstangen angepasste Bohrung in der Plattform. Die Mantelfläche des Durchgangs kann mit einem die Reibung gegenüber der Führungsstange reduzierenden Werkstoff beschichtet sein.

Der Durchgang zur Befestigung des Gleitlagers ist in vorteilhafter Ausgestaltung der Erfindung Bestandteil eines ringförmigen Aufnahmeabschnitts der Plattform, der lediglich über einen schmalen Steg mit dem übrigen Teil der Plattform verbunden ist.

Die Führungselemente der Linearführung und der umlaufende Zahnriemen lassen sich optisch ansprechend mittels einer Hülse einhausen, in dem der Aufnahmeabschnitt unter Ausbildung eines den Aufnahmeabschnitt teilweise umgebenden Ringspaltes mit dem übrigen Teil der Plattform über den Steg verbunden ist und die Hülse mit einem für einen Durchtritt des Stegs eingerichteten Längsschlitz sich durch den Ringspalt hindurch über die Länge der ortsfesten Führungsachse erstreckt. Die Schlitzbreite des Längsschlitzes ist geringfügig größer als die Stegbreite, um unnötige Reibung zwischen dem Steg und dem Schlitz beim Verfahren der Plattform zu vermeiden. Die Einhausung mittels der Hülse schützt die Antriebskomponenten und Führungselemente vor Verschmutzung und Beschädigung. Des Weiteren dient die Einhausung dem Schutz der Benutzer des Futterlifts.

Die Plattform kann in einer zweckmäßigen Ausgestaltung der Erfindung ohne zusätzliche Befestigungselemente an den sich gleichgerichtet bewegenden Trumen des umlaufenden Zahnriemens jeweils durch eine Klemmung des Trums zwischen dem Gleitlager und dem seitlich an der Plattform angeordneten Durchgang befestigt werden. Sofern die beiden Enden des umlaufenden Zahnriemens nicht an der Stoßstelle miteinander verschweißt sind, können die sich überlappenden Enden zwischen dem Gleitlager und dem Durchgang durch Klemmung miteinander verbunden und an der Plattform befestigt werden.

Zur Stabilisierung insbesondere der beiden ortsfesten Führungselemente weist der Futterlift eine in vertikaler Richtung ausgerichtete Zentralstütze auf, an der ein oberes, horizontal verlaufendes Rahmenteil befestigt ist, eingerichtet zur Abstützung der ortsfesten Führungselemente an deren Oberseite. Die Verankerungspunkte der ortsfesten Führungselemente und der Zentralstütze an dem Fuß und an dem Rahmenteil bilden jeweils ein Dreieck.

Der Zahnriemen kann eine Spannvorrichtung aufweisen, die bei einer Längung des Zahnriemens die erforderliche Spannung aufrechterhält.

In einer Ausgestaltung der Erfindung weist die Plattform mindestens eine Aufnahme zur formschlüssigen Fixierung von Gefäßen auf. Die Fixierung der Gefäße in der Aufnahmeplatte erfolgt beispielsweise mittels eines Bajonettverschlusses.

Der Antrieb kann eine Sicherheitsabschaltung aufweisen, die derart eingerichtet ist, dass die Bewegung der Plattform bei definierten Lastzuständen unterbrochen wird, um Verletzungen durch den Futterlift zu vermeiden. Die Sicherheitsabschaltung kann elektrisch und/oder mechanisch erfolgen.

Wenn der Antrieb eine Motorsteuerung aufweist, die die Beschleunigungsphasen, d.h. das Anfahren und Abbremsen der Plattform steuert, kann ein Überschwappen von Behälterinhalten sicher vermieden werden.

Aus Sicherheitsgründen werden der Antrieb und die Elektronik mit Niederspannung (12 Volt) betrieben.

In einer Ausgestaltung der Erfindung können an dem Fuß Kontakte angeordnet sein, die bei Aufsetzen eines in die Plattform eingesetzten Trinkgefäßes eine Umwälzpumpe für das Wasser in dem Trinkgefäß aktivieren.

Aus hygienischen Gründen sind sämtliche Bedienelemente gekapselt und / oder als berührungslos schaltende Elemente ausgeführt.

Nachfolgend wird die Erfindung anhand eines Ausführungsbeispiels näher erläutert.

Es zeigen
- **Figur 1**: eine perspektivische Gesamtansicht eines erfindungsgemäßen Futterliftes,
- **Figur 2**: eine perspektivische Gesamtansicht des Futterlifts nach Figur 1 von der Unterseite mit geöffnetem Fuß zur Veranschaulichung des Antriebskonzepts,
- **Figur 3**: eine Detaildarstellung einer Umlenkung an einem Kopfteil,
- **Figur 4a**: eine Detaildarstellung des linken seitlichen Randes einer vertikal verfahrbaren Plattform des Futterlifts und
- **Figur 4b**: eine Detaildarstellung des rechten seitlichen Randes einer vertikal verfahrbaren Plattform des Futterlifts.

Der Futterlift 1 für Haustiere umfasst einen Fuß 2 zur Aufnahme eines Antriebs für eine verfahrbare Plattform 4. Die Plattform 4 weist mehrere Öffnungen 4.1 zur formschlüssigen Aufnahme von Gefäßen 4.2 auf. Die Gefäße 4.2 dienen beispielsweise zur Aufnahme von Wasser oder Futter für Haustiere.

Von dem Fuß 2 erstrecken sich seitlich zwei Hülsen 5.1, 5.2, nach oben, in denen die Elemente einer Linearführung 6 für die in vertikaler Richtung geführt verfahrbare Plattform 4 angeordnet sind, die im Wesentlichen als längliche, insbesondere ovale Platte ausgeführt ist.

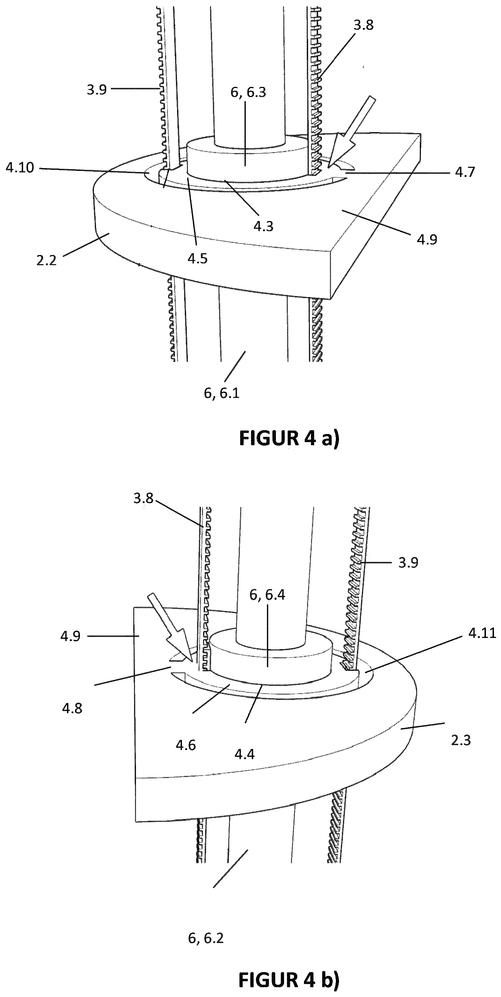

Ferner weist der Futterlift 1 eine zwischen den Hülsen 5.1, 5.2 an einem rückwärtigen Abschnitt 2.1 des Fußes 2 befestigte Zentralstütze 7 auf, an der ein oberes Rahmenteil 8 befestigt ist. Der Fuß 2, die Zentralstütze 7 sowie das Rahmenteil 8 bilden zusammen das Gestell des Futterlifts 1 für die sich in vertikaler Richtung innerhalb der Hülsen 5.1, 5.2 nach oben erstreckenden ortsfesten Führungselemente 6.1, 6.2, der Linearführung 6 (vgl. Figuren 4 a), 4b) mit ausgeblendeten Hülsen 5.1, 5.2)).

Die Linearführung 6 weist außerdem zwei bewegliche Führungselemente 6.3, 6.4 auf, wobei das bewegliche Führungselement 6.3 entlang des links angeordneten gestellfesten Führungselementes 6.1 und das bewegliche Führungselement 6.4 entlang des rechts angeordneten gestellfesten Führungselementes 6.2 beweglich ist.

Die Linearführung 6 ist im dargestellten Ausführungsbeispiel als Gleitführung ausgeführt, bei der die gestellfesten Führungselemente 6.1, 6.2 als Führungsachsen bzw. Führungsstangen und die beweglichen Führungselemente jeweils als Gleitlager bzw. Gleitbuchsen ausgeführt sind.

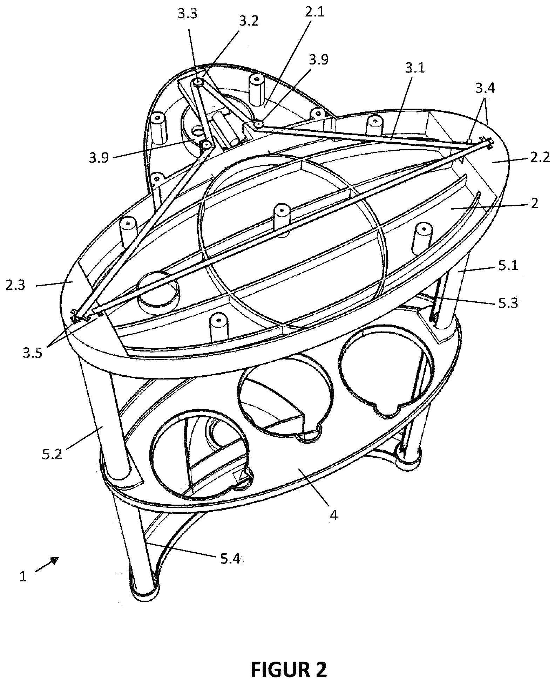

Das Gleitlager 6.3 ist in einem seitlich an der linken Seite der Plattform 4 angeordneten Durchgang 4.3 mit einer Übermaßpassung befestigt (vgl. Figur 4a)) während das Gleitlager 6.4 in einem seitlich an der rechten Seite der Plattform 4 angeordneten Durchgang 4.4 mit einer Übermaßpassung befestigt ist. Weiter ist aus den Figuren 4a), 4b) erkennbar, dass jeder Durchgang 4.3, 4.4 Bestandteil eines ringförmigen Aufnahmeabschnitts 4.5, 4.6 der Plattform 4 ist. Beide ringförmigen Aufnahmeabschnitte 4.5, 4.6 sind jeweils unter Ausbildung eines den Aufnahmeabschnitt 4.5, 4.6 teilweise umgebenden Ringspaltes 4.10, 4.11 mit dem übrigen Teil 4.9 der Plattform 4 über einen Steg 4.7, 4.8 verbunden. Die in Figuren 4a) nicht dargestellte Hülse 5.1 ist mit einem für einen Durchtritt des Steges 4.7 eingerichteten Längsschlitz 5.3 und die Hülse 5.2 mit einem für einen Durchtritt des Steges 4.8 eingerichteten Längsschlitz 5.4 versehen (vgl. Figur 2), wobei sich die beiden Längsschlitze 5.3, 5.4 über die Länge der ortsfesten Führungselemente 6.1, 6.2 erstrecken.

Der insbesondere aus Figur 2 erkennbare Antrieb umfasst ein Riemengetriebe mit einem umlaufenden Zahnriemen 3.1 und ein durch einen Motor 3.2 angetriebenes Antriebsritzel 3.3. Der Motor 3.2 und das Antriebsritzel 3.3 sind in dem als Gehäuse ausgeführten Fuß 2 untergebracht. In dem verstärkten linken seitlichen Randbereich 2.2 des Fußes 2 sind zwei Umlenkungen 3.4 und in dem verstärkten rechten seitlichen Randbereich 2.3 des Fußes 2 sind zwei Umlenkungen 3.5 angeordnet. Die vier Umlenkungen 3.4, 3.5 sind sämtlich als um eine Achse drehbare Umlenkrollen ausgeführt. Sie sind in den seitlichen Randbereichen 2.2, 2.3 des Fußes 2 derart angeordnet, dass der Zahnriemen 3.1 entlang der beiden ortsfesten Führungselemente 6.1, 6.2 jeweils in Trumen 3.8, 3.9 mit entgegengesetzter Laufrichtung umläuft (vgl. Figuren 4a, 4b). Die Umlenkungen 3.4 sind im Bereich des Verankerungspunktes des linken ortsfesten Führungselements 6.1 an dem Fuß 2 und die Umlenkungen 3.5 sind im Bereich des Verankerungspunktes des rechten ortsfesten Führungselements 6.2 an dem Fuß 2 angeordnet. Durch nicht dargestellte Öffnungen im linken seitlichen Randbereich 2.2 des Fußes 2 gelangt der umlaufende Zahnriemen 3.1 in die Hülse 5.1 bzw. aus der Hülse 5.1 in das Innere des als Gehäuse ausgebildeten Fußes 2. Durch nicht dargestellte Öffnungen im rechten seitlichen Randbereich 2.3 des Fußes 2 gelangt der umlaufende Zahnriemen 3.1 in die Hülse 5.2 bzw. aus der Hülse 5.2 in das Innere des als Gehäuse ausgebildeten Fußes 2.

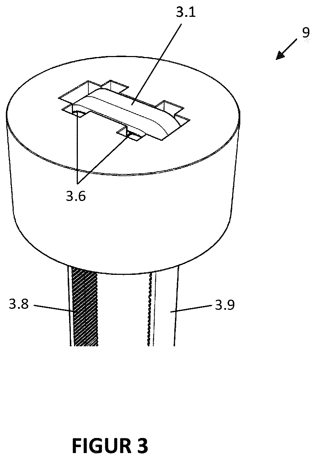

An der Oberseite jeder der beiden ortsfesten Führungselemente 6.1, 6.2 sind weitere Umlenkungen 3.6 angeordnet (vgl. Figur 3), um den Zahnriemen 3.1 jeweils an dem oberen Ende des Führungselementes 6.1,6.2 von der einen Laufrichtung in die entgegengesetzte Laufrichtung umzulenken. Die Umlenkungen 3.6 sind als Umlenkrollen ausgeführt. Die Lagerung der Umlenkrollen erfolgt jeweils in einem in Figur 3 dargestellten Kopfteil 9, das formschlüssig auf das ortsfeste Führungselement 6.1, 6.2 und die umgebende Hülse 5.1, 5.2 aufsetzbar ist. Die Umlenkrollen 3.6 sind in dem Kopfteil 9 drehbar gelagert. Der Abstand der beiden Umlenkrollen 3.6 ist derart gewählt, dass die über Durchgänge in dem Kopfteil 9 in entgegengesetzter Richtung umlaufenden Trume 3.8, 3.9 im Abstand zu dem ortsfesten Führungselement 6.1, 6.2 umlaufen (vgl. Fig 4a), 4b). Die beiden Kopfteile 9 werden durch das auf die Kopfteile Rahmenteil 8 miteinander verbunden.

Die Plattform 4 ist an den sich gleichgerichtet entlang der beiden ortsfesten Führungselemente 6.1, 6.2 bewegenden Trume 3.8 des Zahnriemens 3.1 befestigt. Die Art und Weise der Befestigung ist am besten aus den Figuren 4a, 4b ersichtlich. Die Befestigung erfolgt ohne zusätzliche Befestigungsmittel an den sich gleichgerichtet bewegenden Trumen 3.8 des umlaufenden Zahnriemens 3.1 durch eine Klemmung des Trums 3.8 zwischen dem Gleitlager 6.3 und dem Durchgang 4.3 an der linken Seite der Plattform 4 und durch eine Klemmung des Trums 3.8 zwischen dem Gleitlager 6.4 und dem Durchgang 4.4 an der rechten Seite der Plattform 4. In dem dargestellten Ausführungsbeispiel sind die beiden Enden des umlaufenden Zahnriemens 3.1 an der Stoßstelle nicht miteinander verschweißt. Aus diesem Grund sind an der rechten Seite der Plattform 4 die sich überlappenden Enden des Zahnriemens 3.1 zwischen dem Gleitlager 6.4 und dem Durchgang 4.4 durch Klemmung miteinander verbunden und zugleich an der Plattform 4 befestigt. Weiter ist erkennbar, dass die Verzahnungen an den beiden Enden ineinandergreifen.

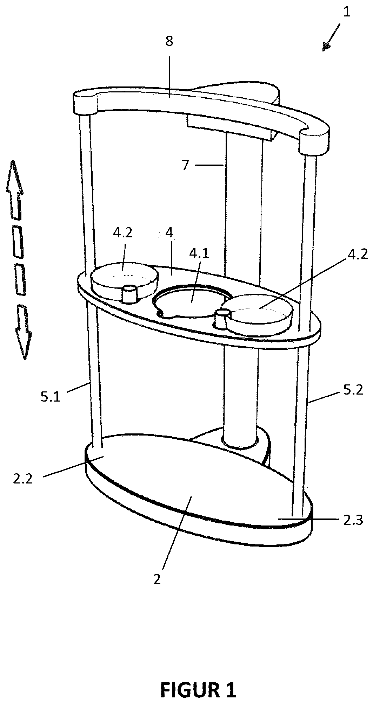

Durch Aktivieren des elektrischen Motors 3.2 in der einen oder anderen Drehrichtung kann die Plattform 4 mithilfe der Linearführung 6 und dem beschriebenen Antriebskonzept in Richtung des Doppelfalls in Figur 1 gleichmäßig und ohne Schiefstellungen oder Verkantungen verfahren werden. Zugleich wird die Standsicherheit des Futterlifts 1 durch Anordnung der wesentlichen Antriebskomponenten in dem Fuß 2 verbessert.

### Bezugszeichenliste

| **Nr.** | **Bezeichnung** |
|---|---|
| 1 | Futterlift |
| 2 | Fuß |
| 2.1 | rückwärtiger Abschnitt |
| 2.2 | seitlicher Randbereich |
| 2.3 | seitlicher Randbereich |
| | |
| 3.1 | Zahnriemen |
| 3.2 | Motor |
| 3.3 | Antriebsritzel |
| 3.4 | Umlenkungen (Fuß) |
| 3.5 | Umlenkungen (Fuß) |
| 3.6 | Umlenkungen Kopfteil |
| 3.8 | Trum |
| 3.9 | Trum |
| 4 | Plattform |
| 4.1 | Öffnungen |
| 4.2 | Gefäße |
| 4.3 | Durchgang |
| 4.4 | Durchgang |
| 4.5 | Aufnahmeabschnitt |
| 4.6 | Aufnahmeabschnitt |
| 4.7 | Steg |
| 4.8 | Steg |
| 4.9 | übriger Teil der Plattform |
| 4.10 | Ringspalt |
| 4.11 | Ringspalt |
| 5.1 | Hülse |
| 5.2 | Hülse |
| 5.3 | Längsschlitz |
| 5.4 | Längsschlitz |
| 6 | Linearführung |
| 6.1 | ortsfestes Führungselement |
| 6.2 | ortsfestes Führungselement |
| 6.3 | bewegliches Führungselement |
| 6.4 | bewegliches Führungselement |
| 7 | Zentralstütze |
| 8 | Rahmenteil |
| 9 | Kopfteil |

## Patentansprüche

1. Futterlift (1) für Haustiere mit einer in vertikaler Richtung geführt verfahrbaren Plattform (4) zur Aufnahme von Gefäßen (4.2) und einem Antrieb zum Verfahren der Plattform (4),
**dadurch gekennzeichnet, dass**
- der Antrieb ein Riemengetriebe mit einem umlaufenden Zahnriemen (3.1) und ein durch einen Motor (3.2) angetriebenes Antriebsritzel (3.3) aufweist,
- der Motor (3.2) und das Antriebsritzel (3.3) in einem Fuß (2) des Futterlifts (1) angeordnet sind,
- das Antriebsritzel (3.3) mit dem umlaufenden Zahnriemen (3.1) kämmt,
- eine Linearführung (6) zwei sich von dem Fuß (2) vertikal nach oben erstreckende ortsfeste Führungselemente (6.1,6.2) und jeweils ein entlang jedes der beiden ortsfesten Führungselemente (6.1,6.2) bewegliches Führungselement (6.3,6.4) aufweist, wobei die beiden beweglichen Führungselemente (6.3,6.4) seitlich an der Plattform (4) befestigt sind,
- in dem Fuß (2) des Futterlifts (1) und jeweils an einer Oberseite der beiden ortsfesten Führungselemente (6.1,6.2) Umlenkungen (3.4,3.5,3.6) für den umlaufenden Zahnriemen (3.1) derart angeordnet sind, dass der Zahnriemen (3.1) entlang der beiden ortsfesten Führungselemente (6.1,6.2) jeweils in Trumen (3.8,3.9) mit entgegengesetzter Laufrichtung umläuft und
- die Plattform (4) an sich gleichgerichtet entlang der beiden ortsfesten Führungselemente (6.1,6.2) bewegenden Trumen (3.8,3.8) des umlaufenden Zahnriemens (3.1) befestigt ist.

2. Futterlift nach Anspruch 1, **dadurch gekennzeichnet, dass** die Linearführung (6) eine Gleitführung ist, die zwei sich von dem Fuß (2) vertikal nach oben erstreckende ortsfeste Führungsachsen und jeweils ein sich entlang jeder Führungsachse bewegliches Gleitlager (6.3,6.4) aufweist.

3. Futterlift nach Anspruch 2, **dadurch gekennzeichnet, dass** die beiden Gleitlager (6.3,6.4) jeweils in einem seitlich an der Plattform (4) angeordneten Durchgang (4.3, 4.4) insbesondere mit einer Übermaßpassung befestigt sind.

4. Futterlift nach Anspruch 3, **dadurch gekennzeichnet, dass** der Durchgang (4.3, 4.4) jeweils Bestandteil eines ringförmigen Aufnahmeabschnitts (4.5, 4.6) der Plattform (4) ist, der über einen Steg (4.7,4.8) mit dem übrigen Teil (4.9)der Plattform (4) verbunden ist.

5. Futterlift nach Anspruch 4, **dadurch gekennzeichnet, dass**
- der Aufnahmeabschnitt (4.5,4.6) unter Ausbildung eines den Aufnahmeabschnitt (4.5, 4.6) teilweise umgebenden Ringspaltes (4.10, 4.11) mit dem übrigen Teil (4.9) der Plattform (4) über den Steg (4.7, 4.8) verbunden ist und
- eine Hülse (5.1,5.2) mit einem für einen Durchtritt des Stegs (4.7,4.8) eingerichteten Längsschlitz (5.3,5.4) sich durch den Ringspalt (4.10,4.11) hindurch über die Länge der ortsfesten Führungsachsen erstreckt.

6. Futterlift nach einem der Ansprüche 2 bis 5, **dadurch gekennzeichnet, dass** die Plattform (4) an den sich gleichgerichtet bewegenden Trumen (3.8) des umlaufenden Zahnriemens (3.1) jeweils durch eine Klemmung des Trums (3.8) zwischen dem Gleitlager (6.3,6.4) und dem seitlich an der Plattform (4) angeordneten Durchgang (4.3,4.4) befestigt ist.

7. Futterlift nach einem der Ansprüche 1 bis 6, **dadurch gekennzeichnet, dass** der Zahnriemen (3.1) eine Spannvorrichtung aufweist, die bei Längung des Zahnriemens die erforderliche Spannung aufrechterhält.

8. Futterlift nach einem der Ansprüche 1 bis 7, **dadurch gekennzeichnet, dass** die Plattform (4) mindestens eine Aufnahme zur formschlüssigen Fixierung von Gefäßen (4.2) aufweist.

9. Futterlift nach einem der Ansprüche 1 bis 8, **dadurch gekennzeichnet, dass** der Antrieb eine Sicherheitsabschaltung aufweist, die derart eingerichtet ist, dass die Bewegung der Plattform (4) bei definierten Lastzuständen unterbrochen wird.

10. Futterlift nach einem der Ansprüche 1 bis 9, **dadurch gekennzeichnet, dass** der Antrieb eine Motorsteuerung aufweist, die die Beschleunigungsphasen steuert.

11. Futterlift nach einem der Ansprüche 1 bis 10, **dadurch gekennzeichnet, dass** an dem Fuß (2) Kontakte angeordnet sind, die bei Aufsetzen eines in die Plattform (4) eingesetzten Trinkgefäßes eine Umwälzpumpe für das Wasser in dem Trinkgefäß aktivieren.

12. Futterlift nach einem der Ansprüche 1 bis 11, **dadurch gekennzeichnet, dass** der Futterlift (1) eine Zentralstütze (7) aufweist, an der ein oberes Rahmenteil (8) befestigt ist, das zur Abstützung der ortsfesten Führungselemente (6.1,6.2) an deren Oberseite eingerichtet ist.

## Claims

1. A feed lift (1) for pets, comprising a platform (4) that is movable in a vertical direction in a guided manner for receiving vessels (4.2) and a drive for moving the platform (4),
**characterized in that**
- the drive comprises a belt drive with a circulating toothed belt (3.1) and a drive pinion (3.3) driven by a motor (3.2),
- the motor (3.2) and the drive pinion (3.3) are arranged in a base (2) of the feed lift (1),
- the drive pinion (3.3) meshes with the circulating toothed belt (3.1),
- a linear guide (6) comprises two stationary guide elements (6.1, 6.2) extending vertically upwards from the base (2) and a respective guide element (6.3, 6.4) movable along each of the two stationary guide elements (6.1, 6.2), wherein the two movable guide elements (6.3, 6.4) are fastened laterally to the platform (4),
- deflection means (3.4, 3.5, 3.6) for the circulating toothed belt (3.1) are arranged in the base (2) of the feed lift (1) and on each upper side of the two stationary guide elements (6.1, 6.2) in such a manner that the toothed belt (3.1) circulates along the two stationary guide elements (6.1, 6.2), in each case in runs (3.8, 3.9) with an opposite running direction, and
- the platform (4) is fastened to runs (3.8, 3.8) of the circulating toothed belt (3.1) moving in the same direction along the two stationary guide elements (6.1, 6.2).

2. Feed lift according to Claim 1, **characterized in that** the linear guide (6) is a sliding guide which comprises two stationary guide axes which extend vertically upwards from the base (2) and respectively one sliding bearing (6.3, 6.4) movable along each guide axis.

3. Feed lift according to Claim 2, **characterized in that** the two sliding bearings (6.3, 6.4) are each fastened in an aperture (4.3, 4.4) arranged laterally on the platform (4), in particular with an oversize fit.

4. Feed lift according to Claim 3, **characterized in that** the aperture (4.3, 4.4) is in each case a constituent part of an annular receiving portion (4.5, 4.6) of the platform (4), which is connected to a remaining portion (4.9) of the platform (4) via a web (4.7, 4.8).

5. Feed lift according to Claim 4, **characterized in that**
- the receiving portion (4.5, 4.6) is connected to the remaining portion (4.9) of the platform (4) via the web (4.7, 4.8) to form an annular gap (4.10. 4.11) partly surrounding the receiving portion (4.5, 4.6), and
- a sleeve (5.1, 5.2) having a longitudinal slot (5.3, 5.4) adapted to allow passage of the web (4.7, 4.8) extends through the annular gap (4.10. 4.11) over a length of the stationary guide axes.

6. Feed lift according to one of Claims 2 to 5, **characterized in that** the platform (4) is fastened to the runs (3.8) of the circulating toothed belt (3.1) moving in the same direction by clamping the run (3.8) in each case between the sliding bearing (6.3, 6.4) and the aperture (4.3, 4.4) arranged laterally on the platform (4).

7. Feed lift according to one of Claims 1 to 6, **characterized in that** the toothed belt (3.1) has a clamping device which maintains the necessary tension during stretching of the toothed belt.

8. Feed lift according to one of Claims 1 to 7, **characterized in that** the platform (4) has at least one receptacle for positive fixing of vessels (4.2).

9. Feed lift according to one of Claims 1 to 8, **characterized in that** the drive has a safety shutdown which is adapted in such a manner that the movement of the platform (4) is interrupted under defined load conditions.

10. Feed lift according to one of Claims 1 to 9, **characterized in that** the drive has a motor controller that controls acceleration phases.

11. Feed lift according to one of Claims 1 to 10, **characterized in that** contacts are arranged on the base (2) which contacts activate a circulating pump for the water in the drinking vessel when a drinking vessel inserted into the platform (4) is placed thereon.

12. Feed lift according to one of Claims 1 to 11, **characterized in that** the feed lift (1) has a central support (7) to which an upper frame part (8) is fastened which is adapted to support the stationary guide elements (6.1, 6.2) at their upper side.

## Revendications

1. Élévateur (1) pour alimentation animale, destiné à des animaux de compagnie, pourvu d'une plateforme (4) déplaçable en étant guidée dans la direction verticale, destinée à recevoir des récipients (4.2) et d'un entraînement, destiné à déplacer la plateforme (4), **caractérisé en ce que**
- l'entraînement comporte une transmission par courroie, dotée d'une courroie dentée (3.1) périphérique et un pignon d'entraînement (3.3) entraîné par un moteur (3.2),
- le moteur (3.2) et le pignon d'entraînement (3.3) sont placés dans un pied (2) de l'élévateur (1) pour alimentation animale,
- le pignon d'entraînement (3.3) s'engrène avec la courroie dentée (3.1) périphérique,
- un guidage linéaire (6) comporte deux éléments de guidage (6.1, 6.2) stationnaires, s'étendant à la verticale vers le haut à partir du pied (2) et chaque fois un élément de guidage (6.3, 6.4) mobile le long de chacun des deux éléments de guidage (6.1, 6.2) stationnaires, les deux éléments de guidage (6.3, 6.4) mobiles étant fixés latéralement sur la plateforme (4),
- dans le pied (2) de l'élévateur (1) pour alimentation animale et chaque fois sur une face supérieure des deux éléments de guidage (6.1, 6.2) stationnaires, des déviations (3.4, 3.5, 3.6) pour la courroie dentée (3.1) périphérique sont placées de telle sorte que la courroie dentée (3.1) circule le long des deux éléments de guidage (6.1, 6.2) stationnaires, chaque fois en des brins (3.8, 3.9) à sens de circulation opposé et
- la plateforme (4) est fixée sur des brins (3.8, 3.8) de la courroie dentée (3.1) périphérique, se mouvant dans un même sens le long des deux éléments de guidage (6.1, 6.2) stationnaires.

2. Élévateur pour alimentation animale selon la revendication 1, **caractérisé en ce que** le guidage linéaire (6) est une glissière de guidage, qui comporte deux axes de guidage stationnaires, s'étendant à la verticale vers le haut à partir du pied (2) et chaque fois un palier lisse (6.3, 6.4) mobile le long de chaque axe de guidage.

3. Élévateur pour alimentation animale selon la revendication 2, **caractérisé en ce que** les deux paliers lisses (6.3, 6.4) sont fixés chacun, notamment par un ajustement serré dans un passage (4.3, 4.4) placé latéralement sur la plateforme (4).

4. Élévateur pour alimentation animale selon la revendication 3, **caractérisé en ce que** le passage (4.3, 4.4) est chaque fois une partie intégrante d'un segment récepteur (4.5, 4.6) de forme annulaire de la plateforme (4), qui par l'intermédiaire d'une barrette (4.7, 4.8) est assemblé avec la partie (4.9) restante de la plateforme (4).

5. Élévateur pour alimentation animale selon la revendication 4, **caractérisé en ce que**
- en formant une encoche annulaire (4.10, 4.11) entourant partiellement le segment récepteur (4.5, 4.6), le segment récepteur (4.5, 4.6) est assemblé avec la partie (4.9) restante de la plateforme (4) par l'intermédiaire de la barrette (4.7, 4.8) et
- une douille (5.1 5.2), dotée d'une fente longitudinale (5.3, 5.4) configurée pour un passage de la barrette (4.7, 4.8) s'étend à travers l'encoche annulaire (4.10, 4.11) sur la longueur des axes de guidage stationnaires.

6. Élévateur pour alimentation animale selon l'une quelconque des revendications 2 à 5, **caractérisé en ce que** la plateforme (4) est fixée sur les brins (3.8) se mouvant dans un même sens de la courroie dentée (3.1) périphérique chaque fois par un serrage du brin (3.8) entre le palier lisse (6.3, 6.4) et le passage (4.3, 4.4) placé latéralement sur la plateforme (4).

7. Élévateur pour alimentation animale selon l'une quelconque des revendications 1 à 6, **caractérisé en ce que** la courroie dentée (3.1) comprend un dispositif tenseur, qui lors d'un allongement de la courroie dentée maintient la tension nécessaire.

8. Élévateur pour alimentation animale selon l'une quelconque des revendications 1 à 7, **caractérisé en ce que** la plateforme (4) comporte au moins un réceptacle pour la fixation par complémentarité de forme de récipients (4.2).

9. Élévateur pour alimentation animale selon l'une quelconque des revendications 1 à 8, **caractérisé en ce que** l'entraînement comporte une coupure de sécurité, qui est configurée de sorte à interrompre le mouvement de la plateforme (4) en présence d'états de charge définis.

10. Élévateur pour alimentation animale selon l'une quelconque des revendications 1 à 9, **caractérisé en ce que** l'entraînement comporte une commande par moteur, qui commande les phases d'accélération.

11. Élévateur pour alimentation animale selon l'une quelconque des revendications 1 à 10, **caractérisé en ce que** sur le pied (2) sont placés des contacts, qui lors de la pose d'un abreuvoir inséré dans la plateforme (4) activent une pompe de brassage de l'eau dans l'abreuvoir.

12. Élévateur pour alimentation animale selon l'une quelconque des revendications 1 à 11, **caractérisé en ce que** l'élévateur (1) pour alimentation animale comporte un pilier central (7), sur lequel est fixée une partie supérieure (8) de cadre, qui est configurée pour soutenir les éléments de guidage (6.1, **6.2)** stationnaires sur leur face supérieure.
